# EUROPEAN PATENT APPLICATION

(11) **EP 3 361 236 A1**
(43) Date of publication of application: **15.08.2018**
(21) Application number: 16853268.7
(22) Date of filing: 05.10.2016
(51) Int. Cl.: G01N 21/64

(54) **IMAGE PROCESSING METHOD AND IMAGE PROCESSING DEVICE**

(30) Priority: 07.10.2015 JP 2015199300
(71) Applicant: Panasonic Corporation, Kadoma-shi, Osaka 571-0051 (JP)
(72) Inventor: SOFUE, Yasuyuki, Osaka-shi Osaka 540-6207 (JP); MAMIYA, Yasuhiro, Osaka-shi Osaka 540-6207 (JP)
(74) Representative: Grünecker Patent- und Rechtsanwälte PartG mbB
(86) International application number: PCT/JP2016/004481
(87) International publication number: WO 2017/061112

(57) **Abstract**

An image processing method of the present disclosure is an image processing method for extracting, as a detection bright spot, a bright spot indicating an object in an observation image. In this image processing method, a bright spot region including the bright spot is defined defining, with respect to the bright spot. A reference pixel is defined in an area surrounding the bright spot region. It is determined whether or not the bright spot region is included in a region of interest by evaluating a luminance value of the reference pixel. The bright spot included in the bright spot region is extracted as the detection bright spot in a case where it is determined that the bright spot region is included in the region of interest.

## Description

### TECHNICAL FIELD

The present disclosure relates to an image processing method and an image processing device for extracting an object in an observation image.

### BACKGROUND ART

The detecting of cells infected by pathogens or cells having specific proteins is important in the fields of food and medicine. For example, health conditions of plants and animals can be found by examining a pathogen infection rate. The pathogen infection rate is calculated using the number of extracted pathogens and the number of extracted cells. Accordingly, it is necessary for examining the pathogen infection rate to extract the number of cells in an observation image and the number of pathogens in the cells.

Conventionally, the number of pathogens in cells is extracted by analyzing a fluorescence observation image of pathogens labelled by a fluorescent dye.

On the other hand, the number of cells is extracted by analyzing a fluorescence observation image of cells stained by another fluorescent dye which is different from the fluorescent dye used for labelling the pathogens. As another method, the number of cells is extracted by analyzing a bright field observation image of cells.

Known prior art documents related to the present disclosure are, for example, PTL 1 and PTL 2.

### CITATION LIST

### PATENT LITERATURE

PTL 1: Japanese Patent Laid-Open Publication No. 2013-57631
PTL 2: Japanese Patent Laid-Open Publication No. 2004-54956

### SUMMARY

An image processing method of the present disclosure is an image processing method for extracting, as a detection bright spot, a bright spot indicating an object in an observation image including bright spots. In this method, a bright spot region including the bright spot is defined with respect to a bright spot. A reference pixel is defined in an area surrounding the bright spot region. It is; determined whether or not the bright spot region is included in a region of interest by evaluating a luminance value of the reference pixel. The bright spot included in the bright spot region is extracted as a detection bright spot in a case where the bright spot region is included in the region of interest.

An image processing device of the present disclosure includes a memory that stores an observation image and a processing unit configured to perform the image processing method on a bright spot. The processing unit is configured to define an observation image including the bright spot, to define a reference pixel around a bright spot region, to determine whether or not the bright spot region is included in a region of interest by evaluating a luminance value of the reference pixel, and extract the bright spot included in the bright spot region as a detection bright spot in a case where the bright spot region is included in the region of interest.

The image processing method and the image processing device of the present disclosure can accurately extract the detection bright spot in the observation image.

### BRIEF DESCRIPTION OF DRAWINGS

FIG. 1 is a schematic view of a fluorescence observation image in accordance with an exemplary embodiment.
FIG. 2 is a block diagram of an image processing device in accordance with the embodiment.
FIG. 3 is a flowchart of an image processing method in accordance with the embodiment.
FIG. 4 illustrates the image processing method in accordance with the embodiment.
FIG. 5 illustrates an example of extracting a bright spot region in accordance with the embodiment.
FIG. 6A illustrates an example of the bright spot region in accordance with the embodiment.
FIG. 6B illustrates another example of the bright spot region in accordance with the embodiment.
FIG. 6C illustrates still another example of the bright spot region in accordance with the embodiment.
FIG. 7 illustrates a frequency distribution of luminance values in the fluorescence observation image in accordance with the embodiment.

### DETAIL DESCRIPTION OF EXEMPLARY EMBODIMENT

In the above-described image processing method, it is preferable that the fluorescence reagent for labelling the object such, for example, as a pathogen or the like, binds specifically to the object. In the fluorescence observation, however, the fluorescence reagent sometimes binds non-specifically to substances other than the object. The fluorescence emitted from the fluorescence reagent bound to the substances other than the object becomes noises in the fluorescence observation image. The noises cause erroneous extraction of the object. Therefore, to accurately extract the object, it is important to determine whether a fluorescence bright spot exists in a region of interest which means within a cell or in a region of no-interest, which means outside of a cell.

However, it is difficult in the conventional method to accurately determine the location of the fluorescence bright spot. Accordingly, the detection bright spot indicating the object in the observation image cannot accurately be extracted in the conventional method.

Hereinafter, an image processing method in accordance with the present disclosure will be described with reference to the drawings. It should be noted that the present disclosure is not limited to the contents described below, within a scope based on the essential features described in the present specification.

### EXEMPLARY EMBODIMENT

### Overview

An image processing method in accordance with the present disclosure is used, for example, for an analysis of a fluorescence observation image obtained by photographing a specimen and an object contained in the specimen.

The specimen may be a sample, such as a cell or a tissue, taken from a biological body. The cell may be, for example, a red blood cell or an induced pluripotent stem cell (IPS cell). The object may be a parasite, a virus, a protein or a foreign substance.

An exemplary embodiment will be described in an example in which the specimen is a red blood cell and the object is a parasite. The parasite exists in the red blood cell.

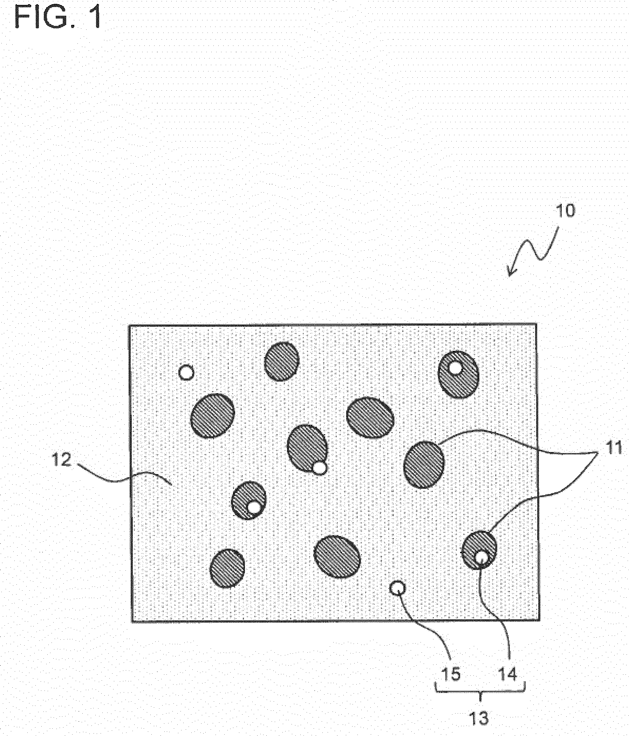

FIG. 1 is a schematic view of fluorescence observation image 10 used in the image processing method of the embodiment.

Fluorescence observation image 10 is an image obtained by photographing, with a fluorescence detecting device, a specimen containing an object stained by a fluorescence reagent.

The specimen binds specifically to the fluorescence reagent. The fluorescence reagent contains a fluorescence dye which binds to the specimen and is excited by excitation light having a predetermined wavelength to emit fluorescence. The fluorescence reagent contains, for example, an antigen which binds selectively to such a protein that is peculiar to the specimen. This allows the fluorescence detecting device to photograph only the specimen.

Similarly, the object binds specifically to the fluorescence reagent. The fluorescence reagent contains a fluorescence dye which binds to the specimen and is excited by excitation light of a predetermined wavelength to emit fluorescence. The wavelength of the excitation light for exciting the fluorescence reagent bound to the specimen to cause fluorescence emission is different from the wavelength of the excitation light for exciting the fluorescence reagent bound to the object to cause fluorescence emission. This allows the fluorescence detecting device to photograph only the object. The fluorescence detecting device has an optical system which produces excitation light rays of two wavelengths. Fluorescence observation image 10 is photographed using the excitation light rays of two wavelengths.

Fluorescence observation image 10 is an image obtained by overlaying images which are separately taken under irradiation of the different excitation light rays. One of the images to be overlaid may be a transmissive observation image obtained by a phase contrast microscopy or the like. The transmissive observation image may, for example, be an image obtained by photographing the specimen. In this case, fluorescence observation image 10 can be photographed by an excitation light ray of only a single wavelength.

Fluorescence observation image 10 includes regions 11 of interest and region 12 of no-interest. Each region 11 of interest is a region in which the specimen such as the red blood cell, exists. Region 12 of no-interest is a region other than regions 11 of interest. That is, region 12 of no-interest is a background region in which no specimen exists.

Fluorescence observation image 10 includes bright spots 13 caused by fluorescence emitted from the fluorescence reagent. Bright spots 13 include detection bright spots 14 each indicating an object to be detected, and non-detection bright spots 15 each indicating a non-object which is not to be detected. Non-detection bright spots 15 are caused by, for example, fluorescence from residues of the fluorescence reagent adsorbed to a detection plate on which the specimen is placed.

Generally, it is preferable that the fluorescence reagent binds specifically to only the object and emits fluorescence. In actual, however, the fluorescence reagent may be adsorbed not specifically to a place other than the object. Bright spot 13 caused by the non-specific adsorption is not detection bright spot 14 indicating the object. Therefore, non-detection bright spot 15 becomes a noise in observation. Accordingly, it is necessary to use an image processing to exclude non-detection bright spots 15 from fluorescence observation image 10.

In accordance with the embodiment, the parasite, which is the object, exists within a red blood cell. Accordingly, each detection bright spot 14 is bright spot 13 which exists within region 11 of interest. Also, each non-detection bright spot 15, which is a detection noise, is bright spot 13 which exists in region 12 of no-interest.

The image processing method in accordance with the present disclosure is performed to extract detection bright spot 14 among plural bright spots 13 included in fluorescence observation image 10.

### Configuration of Image Processing Device

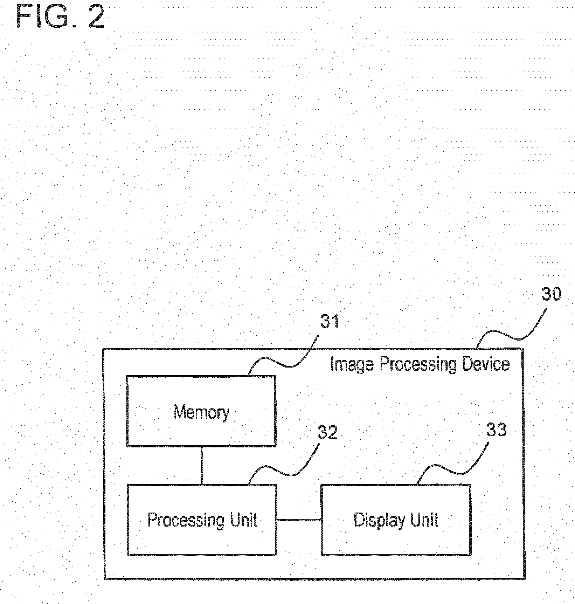

The image processing method in accordance with the present disclosure is performed by, e.g. image processing device 30 shown in FIG. 2.

Image processing device 30 includes memory 31 that stores fluorescence observation image 10 and processing unit 32 that performs the image processing method on fluorescence observation image 10.

Processing unit 32 may be implemented by, e.g. a central processing unit (CPU) that executes the image processing method based on a program. The program may, for example, be stored in a memory of processing unit 32. Otherwise, the program may be stored in memory 31 or an external storage device.

Image processing device 30 may further include display unit 33 that displays, e.g. the number of extracted detection bright spots 14, the number of specimens, and a calculated infection rate. Display unit 33 may be a display device.

### Image Processing Method

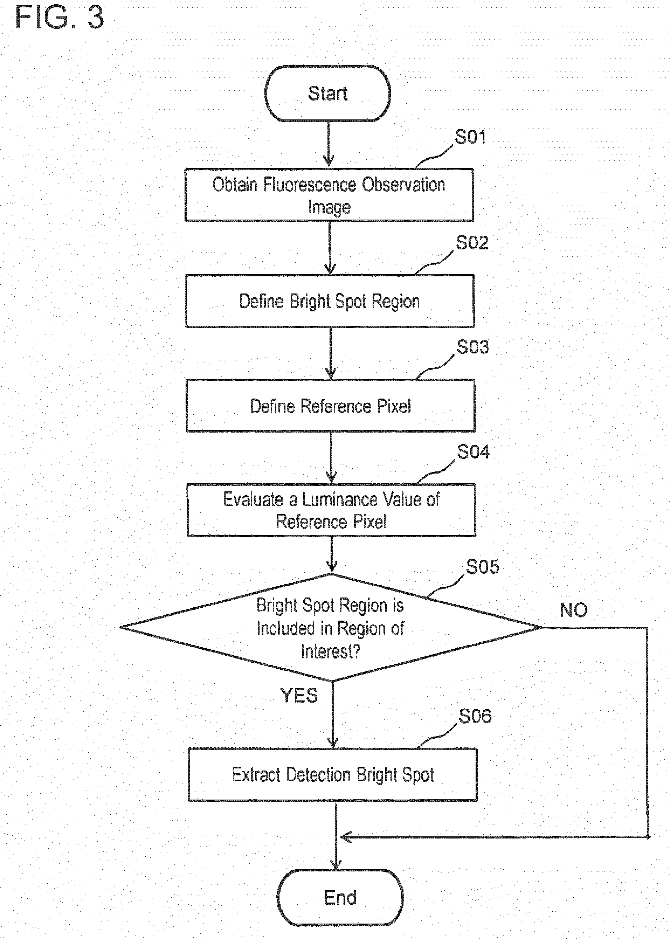

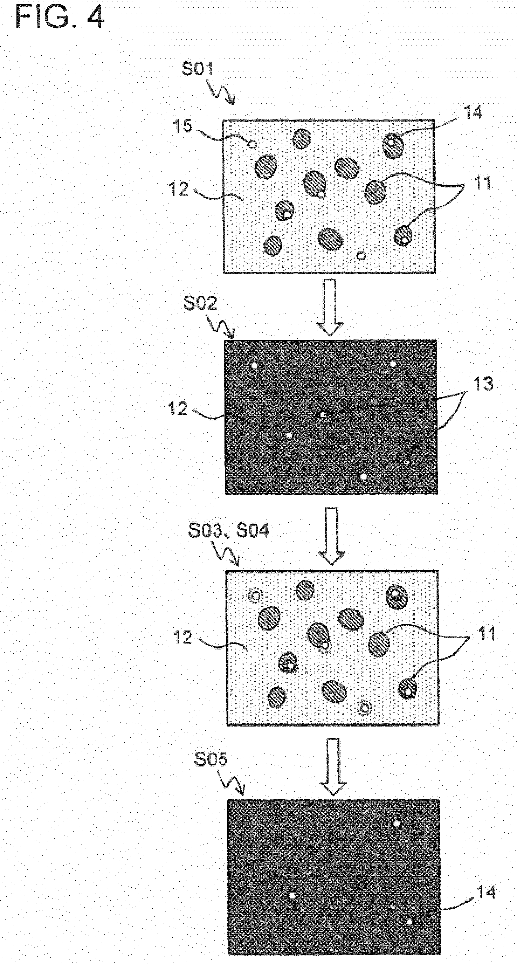

The image processing method performed by processing unit 32 will be described below. FIG. 3 illustrates a flow of the image processing method. FIG. 4 schematically illustrates the processing image of the image processing method. In the following description, the image processing method is executed by image processing device 30.

In step S01, processing unit 32 obtains fluorescence observation image 10 to be processed from memory 31.

Each of pixels constructing fluorescence observation image 10 has corresponding luminance value data. For example, the luminance values of pixels of fluorescence observation image 10 become smaller in the order of a luminance value of a pixel located in an object, a luminance value of a pixel located in a background, and a luminance value of a pixel located in the specimen.

In step S02, processing unit 32 extracts all bright spots 13 included in fluorescence observation image 10. Then, processing unit 32 defines bright spot regions 16 based on extracted bright spots 13.

Each bright spot 13 is a group of pixels each having a luminance value equal to or larger than a predetermined threshold value in fluorescence observation image 10. Bright spots 13 can be extracted by, for example, binarizing fluorescence observation image 10 based on a predetermined luminance value. The predetermined threshold value may be a predetermined value, e.g. between a luminance value of a pixel indicating region 12 of no-interest and a luminance value of a pixel indicating bright spot 13. The extracted bright spots 13 include detection bright spots 14 and non-detection bright spots 15.

Extracted bright spot 13 is an aggregate of pixels, and often has a complicated shape. Bright spot 13 having a complicated shape may complicate a process of defining reference pixel 13 in step S03 described later. To simplify the process in step S03, processing unit 32 defines bright spot region 16 based on each extracted bright spot 13.

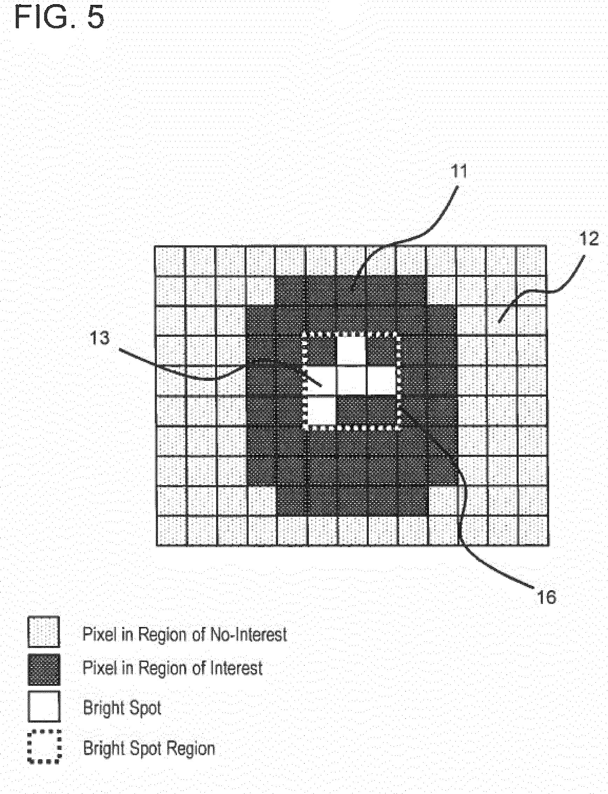

Bright spot region 16 is a region that includes bright spot 13. FIG. 5 illustrates extracted bright spot region 16. Bright spot region 16 may, for example, be a rectangular region circumscribing the pixels corresponding to bright spot 13 as denoted by the dotted line shown in FIG. 5.

Bright spot region 16 may otherwise be defined as a region having a predetermined shape, such as a circular shape or a polygonal shape, that circumscribes bright spot 13.

By defining bright spot region 16 as a region thus having a predetermined shape, processing unit 32 can perform processing steps in and after step S03 without using any complicated algorithm.

In step S03, processing unit 32 defines a pixel around bright spot region 16 as reference pixel 17.

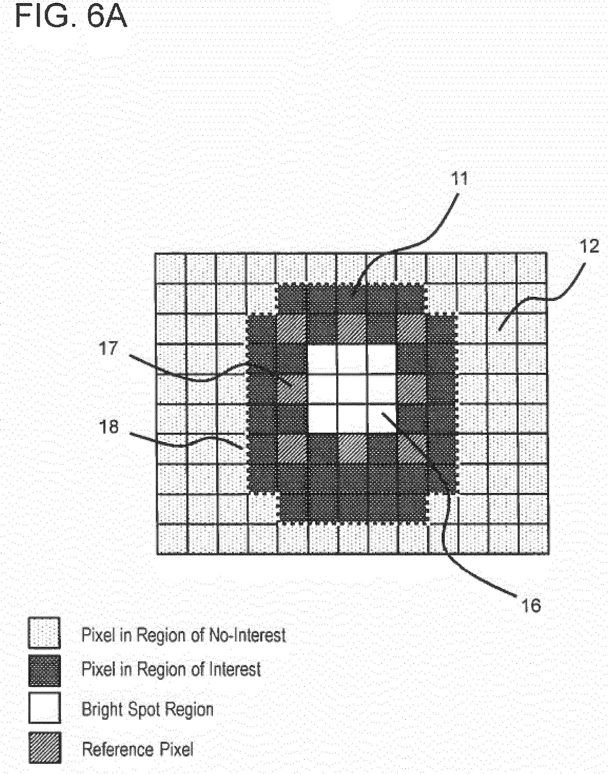

FIGs. 6A to6C illustrate reference pixels 17 are arranged around bright spot region 16. A region surrounded by dotted line 18 is region 11 of interest in which the specimen exists. The state in which bright spot region 16 is arranged will be described later.

Reference pixels 17 are used to determine a location in which bright spot region 16 exists. Reference pixels 17 are pixels located near bright spot region 16. Reference pixels 17 are adjacent to bright spot region 16.

For example, as shown in FIGs. 6A to 6C, reference pixels 17 are eight pixels adjacent to bright spot region 16. Eight reference pixels 17 are located at the four corners and respective centers of the four sides of bright spot region 16. Reference pixels 17 may be thus defined at plural locations in an area surrounding one bright spot region 16.

The positions and the number of reference pixels 17 may be appropriately determined depending on the specimens to be observed or the object.

Reference pixel 17 may be defined as a group of plural pixels adjacent to each other.

Next, processing unit 32 evaluates a luminance value of reference pixel 17 in step S04 to determine in step S05 whether or not bright spot region 16 is included in region 11 of interest. Evaluation of the luminance value of reference pixel 17 is performed using an interest-region criterion that defines a range of luminance values indicating region 11 of interest.

In a case where the luminance value of reference pixel 17 conforms to the interest-region criterion, processing unit 32 determines that the reference pixel 17 is included in region 11 of interest. In other words, processing unit 32 determines that bright spot region 16 is included in region 11 of interest. On the other hand, in a case where the luminance value of reference pixel 17 does not conform to the interest-region criterion, processing unit 32 determines that the reference pixel 17 is included in region 12 of no-interest. In other words, processing unit 32 determines that bright spot region 16 is included in region 12 of no-interest.

The interest-region criterion defines a range of luminance values for the pixels indicating region 11 of interest in fluorescence observation image 10. The interest-region criterion will be described below.

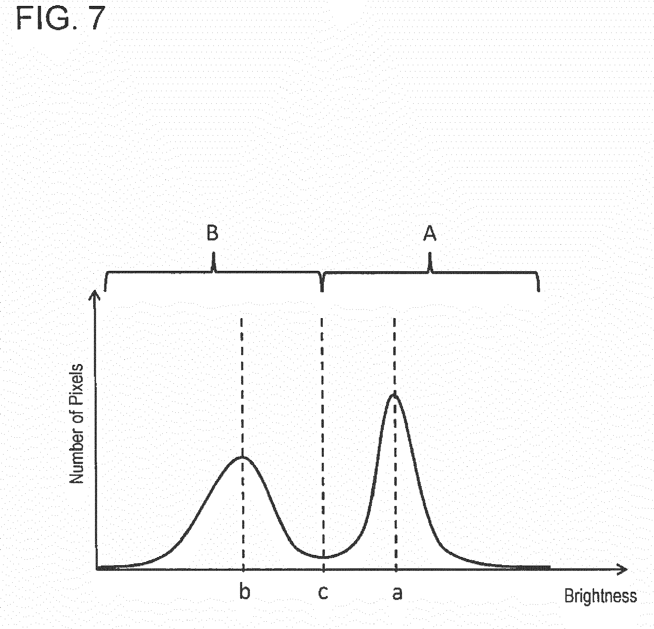

FIG. 7 illustrates a frequency distribution of luminance values in fluorescence observation image 10. The horizontal axis represents a luminance value, and the vertical axis represents the number of pixels having the luminance value. However, FIG. 7 does not indicate the luminance value indicating bright spot 13.

The frequency distribution of luminance values shown in FIG. 7 has local maximum values at luminance value a and luminance value b. A local minimum value is provided at luminance value c between luminance value a and luminance value b.

In this case, luminance value c, which is a border between range A and range B, is a threshold value dividing fluorescence observation image 10 into region 11 of interest and region 12 of no-interest.

In a case where the luminance value of the background is smaller than the luminance value of the specimen in fluorescence observation image 10, range A including luminance value a represents region 11 of interest. Range B including luminance value b represents region 12 of no-interest. In a case where the luminance value of the background is larger than the luminance value of the specimen, range A including luminance value a represents region 12 of no-interest. Also, range B including luminance value b represents region 11 of interest.

In other words, the luminance value indicating the border between region 11 of interest and region 12 of no-interest may, for example, be luminance value c at which the frequency distribution has the local minimum value between luminance value a and luminance value b.

In the case where the luminance value of the background is smaller than the luminance value of the specimen, the interest-region criterion defines a range in which the luminance value is larger than luminance value c as a range of luminance values indicating region 11 of interest. In other words, luminance value c is a lower limit of the luminance value indicating region 11 of interest according to the interest-region criterion. In this case, a no-interest-region criterion defines a range in which the luminance value is equal to or smaller than luminance value c as a range of luminance values indicating region 12 of no-interest. In other words, luminance value c indicates an upper limit of the luminance value indicating region 12 of no-interest according to the no-interest-region criterion. In the case where the luminance value of the background is larger than the luminance value of the specimen, on the other hand, the interest-region criterion defines a range in which the luminance value is smaller than luminance value c as a range of luminance values indicating region 11 of interest. In other words, luminance value c is an upper limit of the luminance value indicating region 11 of interest according to the interest-region criterion. In this case, the no-interest-region criterion defines a range in which the luminance value is equal to or larger than luminance value c as a range of luminance values indicating region 12 of no-interest. In other words, luminance value c indicates a lower limit of the luminance value indicating region 12 of no-interest according to the no-interest-region criterion. In other words, the above-described local minimum value may be defined as a border between the range of luminance values in region 11 of interest and the range of luminance values in region 12 of no-interest.

Processing unit 32 compares the luminance value of reference pixel 17 with the interest-region criterion, and determines that brightness region 16 (reference pixels 17) exists in region 11 of interest in a case where the luminance value of reference pixel 17 conforms to the interest-region criterion. Processing unit 32 compares the luminance value of reference pixel 17 to the no-interest-region criterion, and determines that brightness region 16 (reference pixels 17) exists in region 12 of no-interest in a case where the luminance value of reference pixel 17 conforms to the no-interest-region criterion. However, the no-interest-region criterion may not necessarily be used. For example, if the luminance value of reference pixel 17 does not conform to the interest-region criterion, it may be determined that reference pixel 17 exists in region 12 of no-interest.

An upper limit of range A may be set. The upper limit may be a value between a luminance value indicating bright spot 13 and luminance value c. The upper limit can eliminate influences of undesired noises. Accordingly, region 11 of interest can be identified more accurately.

Similarly, a lower limit of range B may be set. The lower limit can eliminate influences of undesired noises. Accordingly, region 12 of no-interest can be identified more accurately.

The threshold value for distinguishing region 11 of interest and region 12 of no-interest may be a luminance value at the center between luminance value a and luminance value b. The threshold value of luminance value may also be set in other ways. For example, in a case where a range of luminance values indicating region 11 of interest is known, the interest-region criterion may define this range of luminance values as the range of luminance values indicating region 11 of interest.

Range A may be a predetermined range from luminance value a which is a local maximum value. For example, the interest-region criterion may set, as the range of luminance values indicating region 11 of interest, a range of luminance values each deviated by a standard deviation from, as a center value, local maximum luminance value a of the frequency distribution shown in FIG. 7. Range B may be determined similarly.

In a case where a single reference pixel 17 is defined corresponding to one bright spot region 16, processing unit 32 may determine that the one bright spot region 16 is included in region 11 of interest if the luminance value of the single reference pixel 17 satisfies the interest-region criterion. In a case where plural reference pixels 17 are defined corresponding to one bright spot region 16, processing unit 32 may determine that the one bright spot region 16 is included in region 11 of interest in a case where a ratio of reference pixels 17 existing in region 11 of interest to all of reference pixels 17 defined in the bright spot region 16 satisfies a predetermined condition.

The predetermined condition may be, e.g. a condition in which at least a half of the reference pixels 17 are included in region 11 of interest. However, the predetermined condition may not necessarily be this condition. The predetermined condition may be defined within a scope in which it can be determined that bright spot 13 is included in region 11 of interest. For example, the predetermined condition may be a condition in which at least a quarter of the reference pixels 17 are included in region 11 of interest.

In a case where it is determined that bright spot region 16 is included in region 11 of interest in step S05, processing unit 32 extracts, in step S06, bright spots 13 included in bright spot region 16 as detection bright spot 14 indicating an object included in fluorescence observation image 10. In a case where it is determined that bright spot region 16 is not included in region 11 of interest in step S05, processing unit 32 does not extract bright spot 13 included in bright spot region 16 as detection bright spot 14. In other words, such a bright spot is determined as non-detection bright spot 15 caused due to residues of the fluorescence reagent included in fluorescence observation image 10.

### Details of Image Processing Method

The image processing method will be detailed below with reference to FIGs. 6A to 6C. Referring to FIGs. 6A to 6C, eight reference pixels 17 are defined in an area surrounding bright spot region 16. The specific condition for determining whether or not bright spot region 16 is included in region of interest 16 is a condition whether or not at least a half of the reference pixels 17 defined corresponding to bright spot region 16 exist within region 11 of interest.

FIG. 6A is an enlarged observation image showing that bright spot region 16 exists substantially at the center of region 11 of interest. In the case shown in FIG. 6A, all eight reference pixels 17 exist within region 11 of interest surrounded by the dotted line. In other words, at least a half of the reference pixels 17 exist within region 11 of interest.

Accordingly, bright spot 13 included in bright spot region 16 defined by reference pixels 17 is determined as detection bright spot 14.

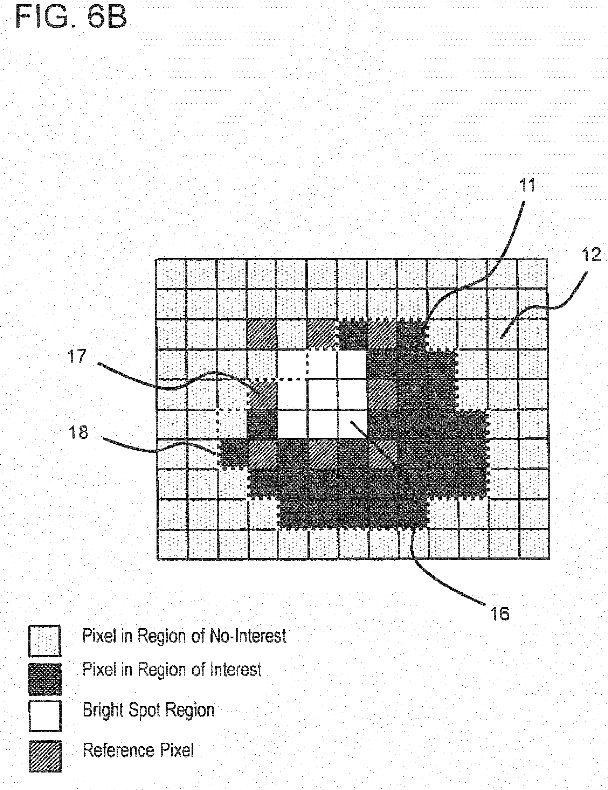

FIG. 6B is an enlarged observation image showing that bright spot region 16 exists in a periphery of region 11 of interest. Bright spot region 16 exists in both region 11 of interest and region 12 of no-interest.

In the case shown in FIG. 6B, six reference pixels 17 among eight reference pixels 17 exist within region 11 of interest surrounded by the dotted line. On the other hand, the remaining two reference pixels 17 exist in region 12 of no-interest. In other words, at least a half the reference pixels 17 exist within region 11 of interest.

Accordingly, bright spot 13 included in bright spot region 16 defined by reference pixels 17, is determined as detection bright spot 14.

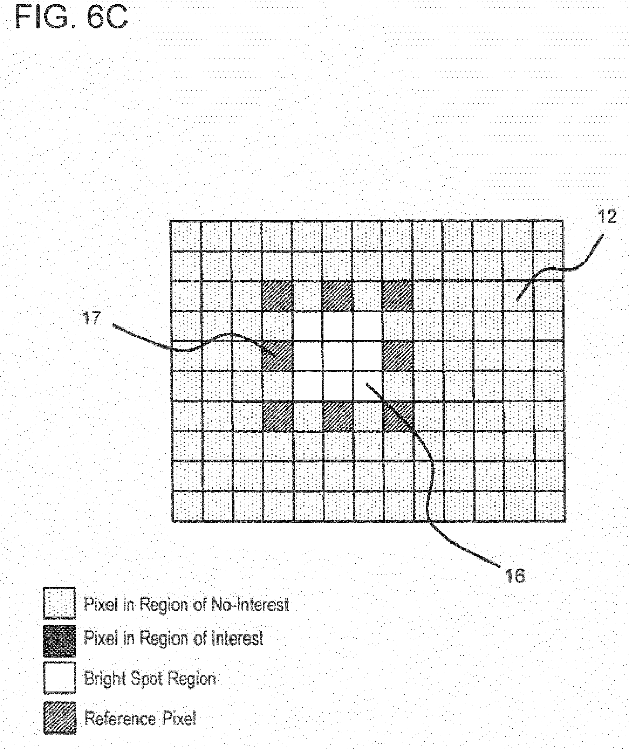

FIG. 6C is an enlarged observation image showing that bright spot region 16 does not exist in region 11 of interest.

In the case shown in FIG. 6C, all eight reference pixels 17 exist in region 12 of no-interest. In other words, at least a half of the reference pixels 17 do not exist within region 11 of interest.

Accordingly, bright spot 13 included in bright spot region 16 defined by reference pixels 17 is determined as non-detection bright spot 15.

The above-described process can extract detection bright spot 14 indicating an object in the specimen from plural bright spots 13 included in fluorescence observation image 10.

Processing unit 32 may perform a process of smoothing the entire image of fluorescence observation image 10 before step S02 shown in FIG. 3 or before calculating the distribution of luminance values. The smoothing process may be performed by using, for example, a Gaussian mask or a bilateral mask.

The process using the Gaussian mask performs smoothing of the luminance values of the entire image by using, for a luminance value of each pixel, the luminance value of the pixel and luminance values of surrounding pixels weighted in a Gaussian distribution according to distances from the pixel.

The process using the bilateral mask performs smoothing of the luminance values of the entire image by using, for a luminance value of each pixel, the luminance value of the pixel and luminance values of surrounding pixels weighted in a Gaussian distribution considering distances from the pixel and differences in luminance values from the pixel.

The smoothing process can remove random noises included in fluorescence observation image 10.

### Conclusion

As described above, the image processing method and the image processing device according to the present disclosure can extract detection bright spot 14 in the observation image accurately, and detect the object accurately.

In accordance with the embodiment, the luminance values in fluorescence observation image 10 become smaller in the order of the object, the specimen, and the background, the present disclosure is not limited to this order. The order of the magnitudes of the luminance values depends on how the fluorescence observation image is obtained.

For example, the luminance values of fluorescence observation image 10 may become smaller in the order of the object, the background, and the specimen.

In a case where the luminance value of the background is larger than the luminance value of the specimen in fluorescence observation image 10, range A shown in FIG. 7 corresponds to the region of no-interest. Also, range B corresponds to the region of interest. Therefore, a luminance value in range B is used as the interest-region criterion.

The process of defining bright spot region 16 by a region having a specific shape may not necessarily be performed.

For example, a group of pixels indicating bright spot 13 may be defined as bright spot region 16. In other words, bright spot region 16 may be defined as the same region as that composed of the group of pixels corresponding to bright spot 13. In this case, reference pixels 17 may be selected, similarly to the above-described process, from, for example, pixels adjacent to the group of pixels corresponding to bright spot 13.

The predetermined condition for determining whether or not bright spot region 16 is included in region 11 of interest may be a condition in which three or more adjacent reference pixels 17 among reference pixels 17 surrounding bright spot region 16 exist in region 11 of interest. The adjacent reference pixels 17 are pixels among reference pixels 17 which are sequentially located along bright spot region 16.

In accordance with the embodiment, region 11 of interest is set as a region in which a specimen exists, and detection bright spot 14 indicating an object existing in the specimen is extracted. However, the present disclosure is not limited to this. Region 11 of interest may be set depending on a region in which an object exists. For example, region 11 of interest may be set outside the specimen, and a bright spot indicating an object existing outside the specimen may be detected. Also, the observation image may not be necessarily the fluorescence observation image. The observation image may be an observation image that does not include any portion of fluorescence image.

In accordance with the embodiment, bright spots 14 included in fluorescence observation image 10 are caused by a fluorescent reagent bound to an object. However, the present disclosure is not limited to this. For example, bright spots 14 included in the observation image may be caused by autofluorescence of the object.

In the above description, an exemplary embodiment has been described as an example of techniques according to the present disclosure. For the description, the accompanying drawings and the detailed description have been provided. Accordingly, the components shown in the drawings and described in the detailed description may include not only components that are essential to solve the problems, but also components that are for exemplifying the above-described techniques and thus are not essential to solve the problems. Therefore, it should not immediately recognize that such non-essential components are essential merely because they are shown in the drawings or described in the detailed description.

Since the above-described exemplary embodiment is for exemplifying the techniques according to the present disclosure, various modifications, substitutions, additions or omissions may be made within the scope of the attached claims and equivalents thereof.

### INDUSTRIAL APPLICABILITY

An image processing method according to the present disclosure is particularly useful for processing a fluorescence observation image of cells, tissues, or the like.

### REFERENCE MARKS IN THE DRAWINGS

- 10: fluorescence observation image
- 11: region of interest
- 12: region of no-interest
- 13: bright spot
- 14: detection bright spot
- 15: non-detection bright spot
- 16: bright spot region
- 17: reference pixel
- 18: dotted line
- 30: image processing device
- 31: memory
- 32: processing unit
- 33: display unit

## Claims

1. An image processing method for extracting a bright spot as a detection bright spot indicating an object in an observation image, the image processing method comprising:
defining a bright spot region including a bright spot in the observation image;
defining a reference pixel in an area surrounding the bright spot region defined in the observation image;
determining whether or not the bright spot region is included in a region of interest by evaluating a luminance value of the reference pixel; and
extracting the bright spot included in the bright spot region as the detection bright spot if determining that the bright spot region is included in the region of interest.

2. The image processing method according to claim 1, wherein evaluation of the luminance value of the reference pixel is performed using an interest-region criterion defining a range of luminance values indicating the region of interest.

3. The image processing method according to claim 2, wherein, in determining whether or not the bright spot region is included in the region of interest, it is determined that the bright spot region is included in the region of interest in a case where a luminance value of the reference pixel conforms to the interest-region criterion.

4. The image processing method according to claim 2,
wherein, in defining the reference pixel, a plurality of reference pixels are defined in the area surrounding the bright spot region, and
wherein, in determining whether or not the bright spot region is included in the region of interest, it is determined that the bright spot region is included in the region of interest in a case where a proportion of reference pixels that have luminance values conforming to the interest-region criterion to the plurality of reference pixels satisfies a predetermined condition.

5. The image processing method according to claim 2, wherein the interest-region criterion defines a range of luminance values indicating the region of interest based on a frequency distribution of luminance values in the observation image.

6. The image processing method according to claim 5,
wherein the frequency distribution of luminance values includes:
a first local maximum value representing the region of interest;
a second local maximum value representing a region of no-interest; and
a local minimum value between the first local maximum value and the second local maximum value, and
wherein the local minimum value is defined as a border between a range of luminance values in the region of interest and a range of luminance values in the region of no-interest.

7. The image processing method according to claim 1, wherein the bright spot region is a rectangular region circumscribing pixels located on the bright spot.

8. An image processing device for extracting, as a detection bright spot, a bright spot indicating an object in an observation image, the image processing device comprising;
a memory that stores the observation image; and
a processing unit,
wherein the processing unit is configured to:
define a bright spot region including a bright spot in the observation image stored in the memory;
define a reference pixel in an area surrounding the bright spot region defined in the observation image stored in the memory;
determine whether or not the bright spot region is included in a region of interest by evaluating a luminance value of the reference pixel; and
extract the bright spot included in the bright spot region as the detection bright spot in a case where it is determined that the bright spot region is included in the region of interest.
